# EUROPÄISCHE PATENTSCHRIFT

(11) **EP 2 603 837 B1**
(45) Veröffentlichungstag und Bekanntmachung des Hinweises auf die Patenterteilung: **06.09.2017**
(21) Anmeldenummer: 11743971.1
(22) Anmeldetag: 28.07.2011
(51) Int. Cl.: G04F 8/08, A63H 18/00

(54) **VORRICHTUNG UND VERFAHREN ZUR ERFASSUNG, ÜBERWACHUNG UND/ODER STEUERUNG VON RENNFAHRZEUGEN**
DEVICE AND METHOD FOR DETECTING, MONITORING AND/OR CONTROLLING RACING VEHICLES
DISPOSITIF ET PROCÉDÉ DE DÉTECTION, DE SURVEILLANCE ET/OU DE COMMANDE DE VOITURES DE COURSE

(30) Priorität: 12.08.2010 DE 202010011317 U
(43) Veröffentlichungstag der Anmeldung: 19.06.2013
(73) Patentinhaber: Novomatic AG, 2352 Gumpoldskirchen (AT)
(72) Erfinder: PLATZER, Peter, 4040 Linz (AT)
(74) Vertreter: Thoma, Michael
(86) Internationale Anmeldenummer: PCT/EP2011/003804
(87) Internationale Veröffentlichungsnummer: WO 2012/019716

(56) Entgegenhaltungen:
- WO-A1-99/53686
- GB-A- 2 382 488
- US-A- 4 183 056
- US-B1- 6 542 183

## Beschreibung

Die vorliegende Erfindung betrifft ein Verfahren und eine Vorrichtung zur Erfassung, Überwachung und/oder Steuerung von Rennfahrzeugen auf einer Rennstrecke, wobei mit zumindest einer Kamera ein jeweiliges Rennfahrzeug beim Überfahren eines vorbestimmten Streckenabschnitts, insbesondere der Start- und/oder Ziellinie, überwacht wird, wobei die von der Kamera bereitgestellten Bilder mit einer Aufzeichnungsvorrichtung aufgezeichnet werden.

Derartige Steuerungs- und Überwachungsvorrichtungen werden dabei insbesondere bei Modellrennstrecken, insbesondere sog. Slotcar-Bahnen eingesetzt, können prinzipiell auch auf echten Rennstrecken und den darauf fahrenden Rennfahrzeugen Verwendung finden. Als Rennfahrzeuge kommen hier naturgemäß verschiedene Fahrzeugtypen wie beispielsweise Autos oder Motorräder in Betracht, es können jedoch prinzipiell auch andere Rennobjekte wie beispielsweise Pferde, Trabrennwagen oder Wasserfahrzeuge wie Rennboote mit entsprechenden Vorrichtungen ausgerüstet bzw. überwacht und erfasst werden, so dass der Term Rennfahrzeug im Kontext der vorliegenden Anmeldung breit zu verstehen ist.

Der Rennbetrieb auf Rennstrecken wird üblicherweise unter Zuhilfenahme von technischen Erfassungsmitteln überwacht und mit entsprechenden Steuerungsbausteinen gesteuert, was beispielsweise die Erfassung der gefahrenen Rundenzahl und/oder Rundenzeit oder die Identifizierung eines jeweiligen Fahrzeugs oder eines diesem Fahrzeug zugeordneten Fahrers anbelangt. Neben den an sich schon länger bekannten Überwachungsmaßnahmen wie Lichtschranken zur Erfassung der Geschwindigkeit, Kameraüberwachung zur Erfassung des Zieleinlaufs oder dergleichen ist es in jüngerer Zeit auch bereits vorgeschlagen worden, Fahrzeuge und die diese steuernden Fahrer sowie die Fahrzeugposition auf der Rennstrecke und die gefahrene Zeit oder Strecke per elektronischer Datenübertragung vom Fahrzeug aus zu überwachen bzw. zu steuern. Beispielsweise schlagen es die Schriften WO 2006/042235 A2 und US 2006/0183405 A1 vor, an den Rennfahrzeugen sog. RFID-Elemente, d.h. mit Datenfunk arbeitende Kennungsbausteine, anzubringen und in diesen RFID-Elementen eine Fahrzeugkennung, eine Fahrerkennung und ggf. weitere Fahrzeug- und Fahrerdaten sowie Rennbetriebsdaten abzuspeichern, die dann von geeigneten, an der Rennstrecke befindlichen RFID-Lesegeräten ausgelesen werden, beispielsweise dergestalt, dass bei jeder Zieldurchfahrt das RFID-Element eines Fahrzeugs ausgelesen, der Rundenzähler entsprechend erhöht und zusammen mit den Fahrzeug- und Fahrerkennungen abgespeichert wird.

Die genannte Schrift WO 2006/042235 A2 schlägt dabei zusätzlich zu den genannten RFID-Lesegeräten vor, in die Fahrbahn Leiterschleifen oder Lichtprojektoren einzulassen, um darüber hinweg fahrende Fahrzeuge zu erfassen.

Werden zur Überwachung eines Streckenabschnitts Kameras eingesetzt, ist es nicht ganz einfach, die hierbei entstehende Bilder- und Datenflut bei der Aufzeichnung zu bewältigen und hieraus das eine Bild oder die wenigen Bilder auszuwählen, die an sich interessieren und das jeweilige Ereignis tatsächlich zeigen. Beispielsweise werden für die Überwachung des Startvorgangs oder des Zieldurchlaufs oder eines anderen bedeutungsvollen Streckenabschnitts wie beispielsweise einer Zwischenzeitlinie, einer Kuppe oder einer Steilkurve gerne Hochgeschwindigkeitskameras eingesetzt, um das interessierende Rennereignis in Zeitlupe zeigen zu können oder ein Bild zur Verfügung zu haben, das tatsächlich das Rennfahrzeug just in dem Moment zeigt, in dem es über den interessierenden Streckenabschnitt fährt. Bei den mit sehr hoher Geschwindigkeit fahrenden Rennfahrzeugen ist es bei Kameras, die nur eine begrenzte Anzahl von Bildern pro Sekunde aufnehmen, keineswegs selbstverständlich, dass ein Bild tatsächlich genau in dem Moment geschossen wird, in dem beispielsweise der Bug eines Fahrzeugs über die Ziellinie geht. Auf der Kehrseite bedeutet dies allerdings, dass sehr viele Bilder und Daten bereitgestellt werden, die an sich nicht interessieren. Werden diese Bilder alle aufgezeichnet, wird sehr viel Speicherplatz benötigt und überdies die spätere Auswertung der Bilder erschwert, da große Bilder- und Datenmengen durchgesehen bzw. analysiert werden müssen, um das eine Bild bzw. die wenigen Bilder auszuwählen, die tatsächlich das zu überwachende Ereignis zeigen.

Aus der DE 103 36 447 A1 ist ein Kamera-Überwachungssystem zur Überwachung des Zieleinlaufs bei Leichtathletik-Veranstaltungen bekannt, bei dem der Zieldurchgang eines Läufers selbst durch eine Lichtschranke erfasst wird und während des Zieldurchlaufes mittels einer Kamera Bilder vom Läufer aufgenommen werden. Mittels einer Bilderkennung wird sodann die Startnummer eines jeweiligen Läufers bestimmt, der die Ziellinie überquert hat. Dieses Überwachungssystem ist jedoch letztlich für die Überwachung von Rennfahrzeugen ungeeignet bzw. den hierbei auftretenden Rennbedingungen nicht gewachsen, da aufgrund der sehr viel geringeren Geschwindigkeit von Läufern beim Zieldurchgang auch mit relativ wenigen Bildern pro Sekunde regelmäßig ein Bild zur Verfügung steht, welches tatsächlich den Zieldurchgang zeigt. Dementsprechend kann mit sehr viel weniger zu speichernden Bildern gearbeitet werden. Um bei Rennfahrzeugen mit sehr viel höherer Geschwindigkeit beispielsweise einen Zieldurchgang sicher durch ein Bild zu erfassen, muss die Kamera beispielsweise in Form einer Hochgeschwindigkeitskamera sehr viele Bilder pro Sekunde produzieren, so dass in der Folge eine sehr viel größere Bilder- und Datenflut zu verarbeiten ist. Hierfür ist das genannte System gemäß DE 103 36 447 A1 nicht in der Lage.

Die Schrift US 6,542,183 schlägt ein Computersystem zur Überwachung von Renn-Events wie Leichtathletikwettbewerben vor, wobei die bei einem Rennstart von einer Kamera gemachten Bilder des Startvorgangs mit einer Markierung versehen und abgespeichert werden. Die Markierungen in Form von Zeitangaben werden dabei in Abhängigkeit des Startsignals gemacht, wobei nicht interessierende von der Kamera bereitgestellte Bilder im Rahmen eines "frame cropping" nicht abgespeichert bzw. wieder gelöscht werden.

Ferner beschreibt die Schrift WO 99/53686 ein Kamerasystem mit Computerauswertung, bei dem das tatsächliche Überfahren bzw. Überlaufen der Ziellinie mit Hilfe einer die Ziellinie überwachenden Kamera bestimmt wird. Der Kamera ist eine Auswerteeinrichtung zugeordnet, die die Bild- bzw. Pixeländerungen und somit den Übergang einer statischen Hintergrunddarstellung im Bereich der Ziellinie zu einem sich bewegenden Bild bestimmt, wobei nur statische Hintergrundbilder, die mangels Bildveränderung keinen Zieldurchgang eines Läufers zeigt, von der Speicherung ausgenommen werden.

Weiterhin beschreibt die US 4,183,056 ein Bildaufzeichnungssystem zur Überwachung des Aufschlagens eines Tennisballs auf oder neben einer Begrenzungslinie, wobei die Begrenzungslinie drucksensitiv ausgebildet sein soll, um das Auftreffen des Balles zu erfassen und das Aufzeichnen der von einer Kamera permanent gelieferten Bilder zu starten. Die Aufzeichnung wird sodann nach Ablauf einer vorbestimmten Zeitspanne wieder gestoppt. Bei diesem System ergibt sich jedoch das Problem, dass das Aufzeichnungsintervall erst mit dem Auftreffen des Balles auf der Linie selbst in Gang gesetzt wird und somit keine Bilder aufgezeichnet bzw. bereitgestellt werden können, die auch die Sequenzen unmittelbar vor dem an sich interessierenden Ereignis zeigen, d.h. es können keine Bilder gezeigt werden, die diesen Ball kurz vor dem Auftreffen zeigen. Ferner wird bei einem Signal der drucksensitiven Begrenzungslinie in das zugehörige Kamerabild eine Markierung eingespeist und mit aufgezeichnet, so dass beim späteren Abspielen die Markierung im Bild zu sehen ist und den Zeitpunkt des Ballaufschlags exakt angibt. Für die Bildanalyse bzw. -auswertung ist ein solches Mitabspeichern einer entsprechenden Markierung jedoch nur bedingt hilfreich, da bei einer entsprechenden Bildauswertung große Datenmengen anfallen und relativ lange Suchzeiten entstehen. Zudem ist das genannte System für die Überwachung von Rennfahrzeugen wenig geeignet, da bei einem Auto- oder Motorradrennen weniger die Sekundenbruchteile nach dem Zieldurchgang, sondern eher die Sekundenbruchteile vor dem Zieldurchgang interessieren und insofern abzuspeichern sind.

Hiervon ausgehend liegt der vorliegenden Erfindung die Aufgabe zugrunde, eine verbesserte Vorrichtung der eingangs genannten Art zu schaffen, die Nachteile des Standes der Technik vermeidet und Letzteren in vorteilhafter Weise weiterbildet. Insbesondere soll eine automatische Kameraüberwachung des Überfahrens eines interessierenden Streckenabschnitts mit hoher Genauigkeit ermöglicht werden, ohne hierfür große Bilder- und Datenmengen speichern und langwierige, aufwändige Auswerteprozesse in Kauf nehmen zu müssen.

Erfindungsgemäß wird diese Aufgabe durch ein Verfahren nach Anspruch 1 sowie eine Vorrichtung nach Anspruch 2 und einher Vorrichtung nach Anspruch 13 gelöst. Bevorzugte Ausgestaltungen der Erfindung sind Gegenstand der abhängigen Ansprüche.

Es wird also vorgeschlagen, die Aufzeichnung der von der Kamera bereitgestellten Bilder auf ein bestimmtes Zeitfenster zu beschränken, das um das Überfahren des interessierenden Streckenabschnitts herum bzw. in dessen Nähe gewählt wird, und dabei das tatsächliche Überfahren des Streckenabschnitts mit einer von der Kamera separaten Sensoreinrichtung zu erfassen, um das im Zeitpunkt des tatsächlichen Überfahrens des Streckenabschnitts aufgenommene Bild, sofern dieses in dem genannten Zeitfenster liegt, entsprechend markieren zu können. Erfindungsgemäß wird mittels einer separaten Sensoreinrichtung das tatsächliche Überfahren des vorbestimmten Streckenabschnitts erfasst und im Moment des Überfahrens ein Sensorsignal abgegeben, wobei das von der Kamera im Moment der Abgabe des Sensorsignals gemachte Bild dann, wenn das abgegebene Sensorsignal in einem vorbestimmten Zeitfenster liegt, mit einer Markierung versehen wird und diese mit dem jeweiligen Bild verknüpfte Markierung in einer Eventliste gespeichert wird. Einerseits wird durch die Beschränkung der Bilderaufzeichnung auf ein begrenztes Zeitfenster die zu speichernde und auszuwertende Datenmenge beschränkt. Andererseits wird durch das Generieren einer Markierung für ein bestimmtes Bild in Abhängigkeit eines Sensorsignals, das das Überfahren des interessierenden Streckenabschnitts angibt, und das Abspeichern dieser Markierung in einer Event-Liste das Auffinden des letztlich interessierenden Bildes deutlich vereinfacht, da lediglich aus den abgespeicherten Bilder das mit der jeweiligen Markierung verknüpfte Bild auszuwählen ist, so dass dann zur Wiedergabe des interessierenden Rennereignisses lediglich das markierte Bild sowie ggf. einige Bilder bzw. Bildsequenzen, die vor und nach dem markierten Bild aufgenommen wurden, abgespielt werden müssen. Dabei müssen nicht die gespeicherten Bilder selbst auf das Vorhandensein einer Markierung hin durchsucht werden, sondern es muss lediglich die Event-Liste durchgegangen werden, in der die jeweiligen Markierungen abgelegt sind. Anhand einer jeweils aus der Markierungsliste ausgelesenen Markierung kann sodann das damit verknüpfte Bild ausgewählt werden, welches

Bild dann das jeweilige Ereignis wie beispielsweise die Zieldurchfahrt anzeigt. Das Abspeichern der Markierungen separat von den zugehörigen bzw. damit verknüpften Bildern in einer Event-Liste reduziert bei der Rennauswertung die zu verarbeitende Datenmenge beträchtlich und verkürzt dementsprechend auch die Zugriffs- und Auswertezeiten.

Dementsprechend können zur Überwachung der Rennstrecke auch mehrere Kameras und/oder Hochgeschwindigkeitskameras eingesetzt werden, die an sich eine große Bilderflut produzieren, ohne dass der Speicher- und Auswertevorgang hierdurch behindert wird. Zum anderen kann durch die genannte Markierungstechnik und deren Zusammenspiel mit der Aufzeichnung in einem bestimmten Zeitfenster eine einfache Überwachung eines korrekten Rennverlaufs erzielt werden, da die in dem entsprechenden Zeitfenster aufgezeichneten Bilder nur daraufhin überprüft werden müssen, ob eines der Bilder eine entsprechende Markierung trägt. Ist nämlich keines der aufgezeichneten Bilder mit einer Markierung versehen, lässt dies den Rückschluss zu, dass ein entsprechendes Ereignis nicht in dem vorbestimmten Zeitfenster erfolgt ist. Insbesondere kann dies dazu genutzt werden, Fehlstarts bzw. Frühstarts zu bestimmen.

In Weiterbildung der Erfindung kann die Aufzeichnungs-Steuervorrichtung das Zeitfenster, innerhalb dessen die von der Kamera bereitgestellten Bilder aufgezeichnet werden, in verschiedener Art und Weise festlegen. Hierzu kann die Steuervorrichtung verschiedene Bestimmungseinrichtungen zur Bestimmung von Anfang und Ende des Zeitfensters umfassen. Insbesondere kann die Steuervorrichtung eine Bestimmungseinrichtung zur automatischen Bestimmung von Anfang und Ende des Zeitfensters in Abhängigkeit einer Rennfahrzeugposition und/oder eines Rennereignisses aufweisen.

In vorteilhafter Weiterbildung der Erfindung kann die Aufzeichnungs-Steuervorrichtung das genannte Zeitfenster in Abhängigkeit eines Startsignals und/oder eines Startvorbereitungssignals festlegen, wobei für die Festlegung des Zeitfensters beispielsweise die Signale einer Startampel berücksichtigt werden können. Vorteilhafterweise kann die genannte Bestimmungseinrichtung Erfassungsmittel zur Erfassung eines Startvorbereitungssignals und/oder eines Startsignals sowie einen Timer bzw. eine Zeitablaufsteuereinrichtung zur Abgabe eines Endsignals für das Zeitfenster nach Ablauf einer vorbestimmten Zeitspanne nach Erfassung des Startvorbereitungssignals und/oder des Startsignals aufweisen. Wird beispielsweise eine aus der Formel 1 bekannte Startampel verwendet, bei der zunächst zur Anzeige der Startvorbereitung eine zunehmende Anzahl von Rotlichtern aufleuchtet und sodann das Startsignal durch ein Grünlicht angegeben wird, kann das genannte Zeitfenster mit einem der Rotlichter geöffnet und nach Ablauf einer vorbestimmten Zeitspanne nach Erhalt des Grünlichts wieder geschlossen werden. Wird andererseits beispielsweise an einer Slotcar-Bahn die Energieversorgung der Bahn erst kurz vor Abgabe des Startsignals scharf gestellt, kann das Zeitfenster für die Aufzeichnung der Kamerabilder durch die genannte Bestimmungseinrichtung dann geöffnet bzw. begonnen werden, wenn entsprechende Spannungs- und/oder Stromerfassungsmittel das Anliegen der elektrischen Energie an den Energieversorgungskontakten der Slotcar-Bahn feststellt.

In Weiterbildung der Erfindung wird hierbei das Zeitfenster beim Startvorgang eine vorbestimmte Zeitspanne vor dem eigentlichen Startsignal geöffnet, beispielsweise durch Erfassung des Rotlichts einer Ampel oder der Freischaltung der Energieversorgung der Slotcar-Bahn, wobei vorteilhafterweise das genannte Zeitfenster mit Abgabe des Startsignals oder so knapp nach Abgabe des Startsignals wieder geschlossen wird, dass ein reguläres Überfahren der Startlinie nach Abgabe des Startsignals gar nicht mehr erfasst wird bzw. an den aufgezeichneten Bildern keine Markierung mehr angebracht wird. Hierdurch können die Datenmengen weiter reduziert werden bzw. wird eine einfache Erkennung von Frühstarts ermöglicht, da bei der Auswertung der aufgezeichneten Bilder keine Markierung erkannt wird, woraus auf einen einwandfreien Startvorgang geschlossen werden kann. Insbesondere wird hierfür das genannte Zeitfenster für die Aufzeichnung der Kamerabilder vor Ablauf einer üblichen menschlichen Reaktionszeitspanne von dem Startsignal ab wieder geschlossen. Beispielsweise kann das genannte Zeitfenster einige Sekundenbruchteile nach Abgabe des Startsignals, beispielsweise nach 100 ms wieder geschlossen werden. Jeder regelkonforme Startvorgang mit einer menschlichen Reaktionszeit führt dabei zu einem tatsächlichen Überfahren der Startlinie zu einem Zeitpunkt, der außerhalb des bestimmten Zeitfensters liegt. Dementsprechend gibt die Sensoreinrichtung das das Überfahren angebende Signal erst nach Aufzeichnungsende ab, so dass kein aufgezeichnetes Bild mehr von der Markierungseinrichtung markiert werden kann.

Nach einer weiteren vorteilhaften Ausführung der Erfindung kann das genannte Zeitfenster insbesondere zur Bestimmung einer Zieldurchfahrt oder einer Zwischenzeitnahme auch in anderer Weise bestimmt werden, wofür die genannte Aufzeichnungs-Steuervorrichtung eine entsprechend anders ausgebildete Bestimmungseinrichtung zur Bestimmung des Zeitfensters besitzt. In vorteilhafter Weiterbildung der Erfindung kann die genannte Bestimmungseinrichtung Erfassungsmittel zur Erfassung der Annäherung eines Rennfahrzeugs an den vorbestimmten Streckenabschnitt und Erfassungsmittel zur Erfassung der Entfernung des Rennfahrzeugs von dem vorbestimmten Streckenabschnitt aufweisen und das genannte Zeitfenster für die Aufzeichnung der Kamerabilder in Abhängigkeit der Signale der genannten Erfassungsmittel festlegen. Alternativ oder zusätzlich könnte die Bestimmungseinrichtung auch einen Timer bzw. eine Zeitfolgesteuereinrichtung besitzen, die das Ende des Zeitfensters nach Ablauf einer vorbestimmten Zeitspanne ab Erfassung der Annäherung des Rennfahrzeugs an den Streckenabschnitt vorgibt. Wird beispielsweise von den genannten Erfassungsmitteln zur Erfassung der Annäherung erfasst, dass ein Rennfahrzeug eine vorbestimmte Strecke vor dem an sich interessierenden Streckenabschnitt erreicht bzw. überfahren hat, kann davon ausgegangen werden, dass bei normalem Lauf innerhalb einer vorbestimmten Zeitspanne der an sich interessierende Streckenabschnitt überfahren ist. Genauer und geschwindigkeitsunabhängig ist jedoch eine Bestimmung des Zeitfensters unter Zuhilfenahme sowohl der Erfassung der Annäherung als auch der Erfassung der Entfernung des Rennfahrzeugs, wobei ggf. dennoch der genannte Timer verwendet werden kann, um eine Plausibilitätskontrolle zu der Erfassung der Annäherung und der Erfassung der Entfernung des Rennfahrzeugs an den bzw. von dem vorbestimmten Streckenabschnitt durchzuführen.

In vorteilhafter Weiterbildung der Erfindung kann die Annäherung und die Entfernung des Rennfahrzeugs an den bzw. von dem interessierenden Streckenabschnitt durch vor und hinter dem genannten Streckenabschnitt an der Rennbahn angeordnete Sensoren erfasst werden. Das Sensorsignal des vor dem Streckenabschnitt angeordneten Sensors gibt die Annäherung des Rennfahrzeugs an, während der hinter dem interessierenden Streckenabschnitt angeordnete Sensor die Entfernung des Rennfahrzeugs von dem genannten Streckenabschnitt angibt. Die genannten Signale der Sensoren können als Trigger-Signal für das Starten der Aufzeichnung bzw. das Beenden der Aufzeichnung der von der Kamera bereitgestellten Bilder verwendet werden.

Die genannten Sensoren können hierbei grundsätzlich verschieden ausgebildet sein, wobei in vorteilhafter Weiterbildung der Erfindung induktive Sensoren vor dem bzw. hinter dem zu überwachenden Streckenabschnitt angeordnet sind, um die Annäherung bzw. die Entfernung des Rennfahrzeugs an den bzw. von dem genannten Streckenabschnitt zu erfassen. Alternativ oder zusätzlich zu einem solchen induktiven Sensor kann auch ein optischer Sensor beispielsweise in Form einer Lichtschranke Verwendung finden. Um nicht nur die Annäherung bzw. die Entfernung eines Rennfahrzeugs an sich, sondern auch darüber hinaus gehende Informationen erfassen zu können, können auch intelligentere Sensoren Verwendung finden, insbesondere in Form eines RFID-Lesers und/oder eines Barcode-Lesers, so dass nicht nur die Annäherung oder die Entfernung eines Rennfahrzeugs erfasst werden kann, sondern auch noch erfasst werden kann, welches Rennfahrzeug sich annähert bzw. entfernt, indem ein am Fahrzeug angebrachtes RFID-Element oder Strichcode-Element ausgelesen wird.

Ähnlich wie die genannten Sensoren zur Bestimmung des Zeitfensters für die Aufzeichnung der Kamerabilder kann auch die Sensoreinrichtung zur Bestimmung des tatsächlichen Überfahrens des zu überwachenden Streckenabschnitts unterschiedlich ausgebildet sein. Vorteilhafterweise kann die genannte Sensoreinrichtung zur Erfassung des Überfahrens des zu überwachenden Streckenabschnitts einen optischen Sensor vorzugsweise in Form einer Lichtschranke umfassen, der sehr präzise den exakten Zeitpunkt des Überfahrens erfassen kann und das entsprechenden Sensorsignal ausreichend schnell bereitstellt. Alternativ oder zusätzlich kann die genannte Sensoreinrichtung jedoch auch andere Sensoren wie beispielsweise induktive Sensoren oder auch die genannten RFID-Leser bzw. Barcode-Leser umfassen, um auch die Fahrzeugidentität zu erfassen. Um den Durchgang des Rennfahrzeugs jedoch mit der ausreichenden Präzision zu messen und das Sensorsignal entsprechend schnell bereitstellen zu können, ist der genannte optische Sensor in Form einer Lichtschranke besonders vorteilhaft. Die genannten weiteren Sensoren wie RFID-Leser oder Strichcode-Leser können vorteilhafterweise zusätzlich vorgesehen sein, um die Fahrzeugidentität bestimmen zu können.

In vorteilhafter Weiterbildung der Erfindung können die genannten Sensoreinrichtungen zur Erfassung der Annäherung und Entfernung der Rennfahrzeuge und der Erfassung des exakten Überfahrens des interessierenden Streckenabschnitts in die Fahrbahn integriert und/oder unter der Fahrbahn angeordnet sein. Um hierbei eine einfache Montage zu gewährleisten, können die genannten Sensoreinrichtungen auf einem gemeinsamen Sensorträger montiert sein, der vorzugsweise seitlich vom Fahrbahnrand her in einen Aufnahmeraum unter der Fahrbahn einschiebbar ist.

Um ein späteres Abspielen der aufgenommenen Bilder auf die tatsächlich interessierenden Bilder beschränken zu können, kann in Weiterbildung der Erfindung eine Abspielsteuervorrichtung zum automatischen Abspielen von aufgezeichneten Bildern vorgesehen sein, die einen Markierungsleser umfasst, der an den Bildern angebrachte Markierungen liest bzw. erfasst. Durch entsprechende Auswahlmittel kann die Abspielsteuervorrichtung sodann diejenigen abgespeicherten Bilder auswählen, die eine Markierung aufweisen, wobei ggf. kurz vor und nach einem markierten Bild abgespeicherte Bildsequenzen mit ausgewählt und angezeigt werden können. Vorteilhafterweise kann die Abspielsteuervorrichtung das Abspielen der aufgezeichneten Bilder in Abhängigkeit der ausgelesenen Markierungen steuern, insbesondere derart, dass für das Abspielen ausgewählte Bildsequenzen dann nach Art einer Slowmotion-Darstellung verlangsamt oder angehalten werden, wenn ein markiertes Bild zur Abspielung kommt. Alternativ oder zusätzlich kann auch ein Zurückspringen und ein nochmaliges Abspielen der entsprechenden Bildsequenz vorgenommen werden, wenn es zum Abspielen eines markierten Bildes kommt, um beispielsweise die Zieldurchfahrt ein zweites Mal darzustellen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung der Überwachungsvorrichtung zur Überwachung der Rennfahrzeuge auf einer Rennstrecke nach einer vorteilhaften Ausführung der Erfindung, die das Zusammenwirken einer Kamera zur Überwachung der Start- und Zieldurchfahrt und der Steuerungselemente für das Steuern der Aufzeichnung der Kamerabilder und des Wiederabspielens der aufgezeichneten Bilder zeigt,
- Fig. 2:: ein Zeitdiagramm zur Verdeutlichung der Zeitfenster, in denen Bilder von der Kamera des Systems aus Fig. 1 aufgezeichnet werden und der Trigger-Signale, bei deren Auftreten einzelne Bilder markiert werden, und
- Fig. 3:: eine schematische Darstellung einer mehrspurigen Rennstrecke, deren Überwachung durch mehrere Kameras und die Anbindung der Überwachungsvorrichtung aus Fig. 1.

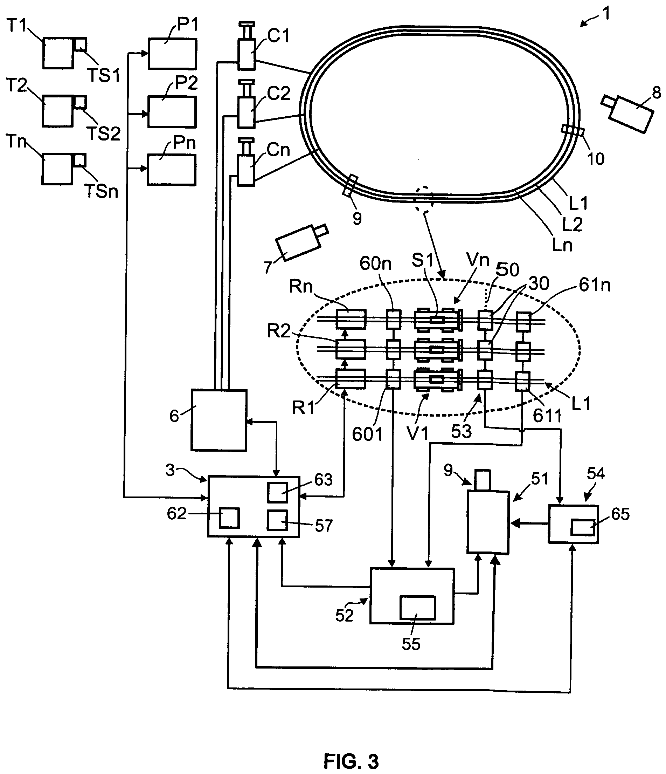

Die in Fig. 3 gezeigte Rennstrecke 1 umfasst mehrere Fahrspuren L1, L2, Ln und kann vorteilhafterweise als sog. Slotcar-Bahn ausgebildet sein, auf der Rennfahrzeuge V1, V2, Vn mit Stromabnehmern in Spuren laufen, welche Spuren in die Fahrbahn der Rennstrecke 1 eingelassen sind. In an sich bekannter Weise sind in die genannten Fahrspuren Stromversorgungsleitungen eingelassen (nicht näher dargestellt), deren Strom- bzw. Spannungsbeaufschlagung über damit verbundene Steuerungsgerät C1, C2, Cn gesteuert werden kann, wobei die Strom- bzw. Spannungsversorgung jeder Fahrspur L1, L2, Ln unabhängig von den übrigen Fahrspuren gesteuert bzw. geregelt werden kann.

Wie Fig. 3 zeigt, sind der Rennstrecke 1 in der gezeichneten Ausführung zwei Kameras 7 und 8 zugeordnet, die verschiedene Abschnitte der Rennstrecke 1 überwachen, um ein jeweiliges Rennen in Form von Fernsehbildern übertragen zu können, wie noch erläutert wird.

Vorteilhafterweise können für die Rennstrecke 1 Teilnehmer mit Hilfe eines zentralen Rechners 3 registriert werden. Hierbei kann das Rennen in verschiedenen Ausführungen durchgeführt werden, beispielsweise kann es ein Ziel sein, den jeweils schnellsten Fahrer zu ermitteln, d.h. jenen Fahrer, der als erster ein durch ihn gesteuertes Rennfahrzeug entlang eines definierten Streckenabschnitts der Autorennbahn gesteuert hat. Alternativ oder zusätzlich können die über eine vorbestimmte Zeit erreichten Rundenzahlen das Rennergebnis bestimmen.

Zum einen wird zunächst jedem der Teilnehmer T1, T2, Tn ein Teilnehmerspeicher TS1, TS2, TSn vorzugsweise in Form einer RFID-Karte mit einer jeweiligen Fahrerkennung TID1, TID2, TIDn zugeordnet, wobei vor dem Rennbetrieb ein Registrieren der jeweiligen Teilnehmer erfolgt, indem ein geeignetes Empfangs- und/oder Lesegerät beispielsweise in Form eines RFID-Readers den jeweiligen Teilnehmerspeicher TS1, TS2, TSn ausliest, wobei die jeweils zugehörige Fahrerkennung TID ermittelt und diese in einem ersten Speicherbereich einer zentralen Datenbank gespeichert wird.

Weiterhin werden die Rennfahrzeuge V1, V2, Vn mit einem jeweiligen Fahrzeugspeicher S1, S2, Sn vorzugsweise in Form eines RFID-Elements versehen, denen einen jeweilige Fahrzeugkennung zugeordnet ist. In einem weiteren Schritt erfolgt ebenfalls vor dem Rennbetrieb ein Registrieren der Fahrzeugkennungen, indem mittels eines geeigneten Empfangs- bzw. Lesegeräts die Fahrzeugspeicher S1, S2, Sn ausgelesen werden, wobei die Fahrzeugkennungen ermittelt und auf die genannte Datenbank übermittelt werden, wo sie in einem zweiten Speicherbereich abgelegt werden.

Nach erfolgter Registrierung der Rennfahrzeuge V1, V2, Vn und der Teilnehmer T1, T2, Tn nimmt der zentrale Rechner 3 die Zuordnung der Teilnehmer zu den Rennfahrzeugen vor Rennbeginn automatisch vor und zeigt diese Zuordnung auf einer Anzeige an. Der Rechner 3 kann hierzu einen Zufallsgenerator aufweisen, der die Zuordnung der Teilnehmer zu den Rennfahrzeugen zufallsgestützt vornimmt.

Vorteilhafterweise nimmt der Rechner 3 auch automatisch eine Zuordnung der Rennfahrzeuge zu den jeweiligen Fahrspuren vor, wobei vorteilhafterweise auch diese Zuordnung zu den Fahrspuren von dem Zufallsgenerator zufallsgestützt vorgenommen werden kann. Auch diese Zuordnung wird vor Rennbeginn auf der Anzeige angezeigt.

Entsprechend der vorgegebenen Zuordnung und Auswahl sind sodann die Rennfahrzeuge V1, V2, Vn auf die entsprechenden Fahrspuren L1, L2, Ln der Rennstrecke 1 zu setzen. Das korrekte Aufsetzen der Rennfahrzeuge wird mittels der an den Fahrzeugen vorgesehenen jeweiligen Fahrzeugspeicher überwacht, wobei vorteilhafterweise den jeweiligen Fahrspuren L1, L2, Ln Empfangs-/Lesegeräte R1, R2, Rn zugeordnet sind, beispielsweise diese darin eingelassen oder daran angebracht sind, um den Fahrzeugspeicher S1, S2, Sn des Fahrzeugs auszulesen, das sich auf der jeweiligen Fahrspur befindet. Die genannten Empfangs-/Lesegeräte R1, R2, Rn überprüfen die Fahrzeugkennung und geben diese an eine Freischaltvorrichtung weiter, die im Rechner 3 oder den genannten Steuerungsgeräten C1, C2, Cn angeordnet sein kann. Steht das richtige Fahrzeug auf der richtigen Fahrspur, wird die entsprechende Fahrspur und das entsprechende Fahrzeug freigeschaltet.

Weiterhin werden an den Steuerungsgeräten C1, C2, Cn mittels dort vorgesehener Empfangs-/Lesegeräte P1, P2, Pn die Teilnehmerspeicher TS1, TS2, TSn der das jeweilige Steuerungsgerät C1, C2, Cn handhabenden Teilnehmer ausgelesen. Dies kann beispielsweise dadurch erfolgen, dass der jeweilige Teilnehmer seine RFID-Karte in das entsprechende Steuerungsgerät P1, P2, Pn steckt oder in kontaktlose Kommunikation bringt. Die ausgelesenen Teilnehmerkennungen TID1, TID2, TIDn werden sodann ebenfalls an die genannte Freischaltvorrichtung gesandt, um dort mit der vom Rechner 3 vorgegebenen Zuordnung verglichen zu werden. Ist der richtige Teilnehmer am richtigen Steuerungsgerät, wird das jeweilige Steuerungsgerät freigeschalten.

Sind alle Teilnehmer an den vorbestimmten Steuerungsgeräten C1, C2, Cn und sind alle Rennfahrzeuge V1, V2, Vn auf den richtigen Fahrspuren, kann der Rechner 3 ein entsprechendes Startsignal generieren, das in geeigneter Weise zur Anzeige gebracht wird.

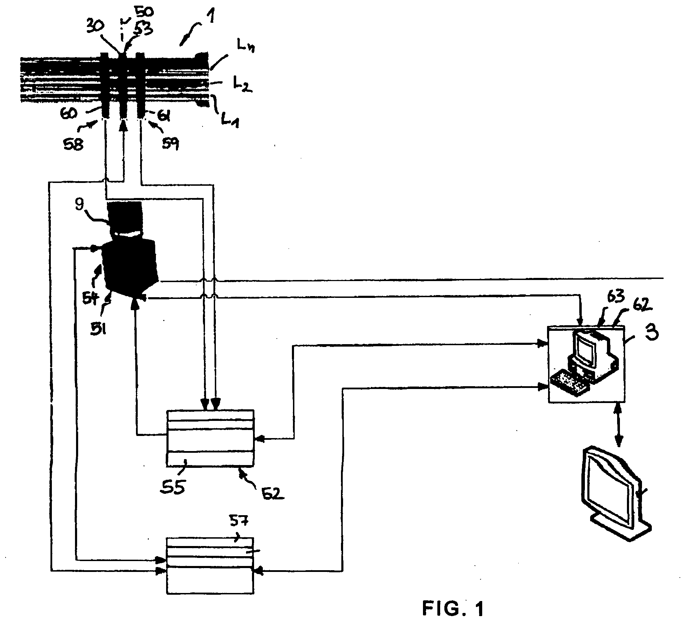

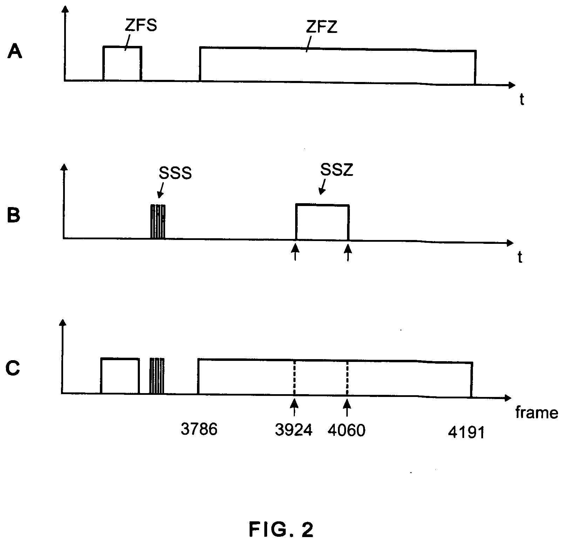

Die Figuren 1 und 2 zeigen die Vorrichtung zur Steuerung der Kamera 7 aus Fig. 3 sowie zur Aufzeichnung und Wiederauswahl der entsprechenden Bilder näher.

Beim Start erzeugt der genannte Rechner 3 zunächst ein Startvorbereitungssignal, beispielsweise indem eine Ampel auf Rot geschaltet wird und/oder indem die Stromversorgung der Rennstrecke 1 aktiviert wird. Dieses Startvorbereitungssignal sendet der Rechner 3 an eine Aufzeichnungs-Steuervorrichtung 52, die die Aufnahmezeitpunkte der Kamera 7 steuert. Bei Erfassung des Startvorbereitungssignales wird die genannte Kamera 7 aktiviert bzw. werden die hiervon bereitgestellten Bilder in eine Aufzeichnungsvorrichtung 51, die in die Kamera integriert sein kann, aufgezeichnet.

Sodann gibt der Rechner 3 das eigentliche Startsignal, beispielsweise durch Umschalten einer Ampelanzeige auf Grünlicht. Dieses Signal wird wiederum von der genannten Aufzeichnungs-Steuervorrichtung 52 verarbeitet, nämlich dahingehend, dass das zuvor mit dem Startvorbereitungssignal geöffnete Zeitfenster für die Aufzeichnung der Kamerabilder geschlossen wird. Dies kann vorteilhafterweise zeitversetzt erfolgen, wobei der Zeitversatz durch einen Timer 57 vorgegeben werden kann. Beispielsweise kann eine Nachlaufzeit von ca. 100 ms über das Startsignal hinaus vorgesehen werden. Hierdurch wäre jeder Frühstart sicher in der Aufzeichnungsvorrichtung 51 aufgezeichnet, während andererseits keine unnötigen Bilder abgespeichert werden, wenn alle Fahrzeuge regulär starten.

Das tatsächliche Überfahren der Startlinie 50 wird durch eine Sensoreinrichtung 53 erfasst, die beispielsweise einen an der Startlinie 50 vorgesehenen Sensor 30 umfassen kann, der beispielsweise als optischer Sensor und/oder als Lichtschranke ausgebildet sein kann. Beispielsweise kann ein Fotosensor in einem Aufnahmeraum unter der Fahrbahn platziert sein, der durch ein transparentes Sensorfenster in der Fahrbahn das Überfahren der Startlinie 50 überwacht, wobei der genannte Fotosensor 30 als Fotowiderstand oder als Fotodiode oder auch als Fototransistor, der unter Ausnutzung der inneren fotoelektrischen Effektes arbeitet, oder auch als Fotozelle bzw. Fotomultiplier oder als pyroelektrischer Sensor, der unter Ausnutzung von Ladungsverschiebungen aufgrund der Temperaturänderung bei Lichtabsorption arbeitet, ausgebildet sein kann.

Die genannte Sensoreinrichtung 53 stellt bei Überfahren der Startlinie 50 ein entsprechendes Sensorsignal bereit, das von einer Markierungsvorrichtung 54 dazu verwendet wird, das im entsprechenden Moment aufgenommene Bild zu markieren. Liegt dieses Bild indes außerhalb des zuvor beschriebenen Zeitfensters, erfolgt keine Markierung, d.h. bei einem regulären Start wird keines der Bilder markiert. Diesen Ablauf der Bildaufzeichnung und der Trigger-Signale von der Sensoreinrichtung 53 zeigt auch Fig. 2, in der auf der Zeitschiene A das der Frühstartphase entsprechende Zeitfenster ZF_{Start} gezeigt ist, während der die Kamerabilder aufgenommen werden. Die Sensorsignale SS Start liegen zeitlich erst nach dem genannten Zeitfenster, so dass keine Markierung erfolgt. In der genannten Fig. 2 zeigt die Teilansicht B die entsprechenden Sensor- bzw. Trigger-Signale, während die Teilansicht C sodann die Gesamtinformation zeigt.

Beim Zieleinlauf wird das Zeitfenster ZF_{Ziel} von der Bestimmungseinrichtung 55 mit Hilfe von Erfassungsmitteln 58 und 59 bestimmt, die die Annäherung der Rennfahrzeuge an die Ziellinie 50 sowie nach dem Überfahren das Wiederentfernen von der Ziellinie angeben. Wie Fig. 1 zeigt, sind hierzu an der Rennstrecke 1 ein Stück weit vor der Ziellinie 50 und ein Stück weit nach der Ziellinie Sensoren 60 und 61 angeordnet, insbesondere unter der Fahrbahnoberfläche positioniert, wobei die genannten Sensoren beispielsweise als induktive Sensoren ausgebildet sein können. Überfährt das erste Rennfahrzeug den Annäherungssensor 60, stellt dieser ein Signal bereit, welches von der Aufzeichnungs-Steuervorrichtung 52 dazu verwendet wird, die Kamera 7 bzw. die Aufzeichnungsvorrichtung 51 zu aktivieren. Fährt sodann das letzte Rennfahrzeug über die Ziellinie sowie den hinter der Ziellinie 50 angeordneten Ausfahrsensor 61, wird das entsprechende Sensorsignal von der Aufzeichnungs-Steuervorrichtung 52 dazu genutzt, das Zeitfenster für die Aufzeichnung zu schließen und die Aufzeichnung zu beenden.

Während dieses durch die Bestimmungseinrichtung 55 vorgegebenen Zeitfensters ZF_{Ziel} für den Zieleinlauf werden sodann durch den zuvor genannten Lichtschrankensensor 30 Sensorsignale SS Ziel bereitgestellt dann, wenn die Rennfahrzeuge tatsächlich über die Ziellinie 50 fahren. Diese Trigger-Signale sind in Fig. 2 auf der Zeitschiene B und der Zeitschiene C dargestellt und geben im gezeichneten Ausführungsbeispiel den Zieldurchgang des ersten Rennfahrzeugs und des zweiten Rennfahrzeugs an.

Von der genannten Markierungsvorrichtung 54 werden die zu den entsprechenden Zeitpunkten aufgezeichneten Bilder "3924" und "4060" mit einer Markierung versehen.

Das Wiederabspielen der aufgenommenen Bilder wird durch den Steuerrechner 3 gesteuert. Dieser Rechner 3 registriert die Zieleinläufe durch eine Zeitmesseinheit 65, die mit den genannten Zieldurchgangssensoren 30 verbunden ist. Sind die Autos im Ziel, wird die Kamera 7 bzw. die Aufzeichnungsvorrichtung 51 von dem Rechner 3 nach den aufgetretenen Events gefragt. Diese Abfrage liefert die im Zeitverlauf dargestellte Eventliste wie in Fig. 2, Teilansicht C dargestellt. Der Steuerrechner 3 kann dann die abgefragten Bilder abspielen, wobei die von einem Markierungsleser 63 gelesenen Markierungen an den Bildern von der Abspielsteuervorrichtung 62 genutzt werden können, beim Abspielen beispielsweise just bei der Zieldurchfahrt eines Fahrzeugs die Bildsequenz anzuhalten oder zu verzögern oder zurückzufahren und erneut abzuspielen.

## Patentansprüche

1. Verfahren zur Erfassung, Überwachung und/oder Steuerung von Rennfahrzeugen (V1, V2, Vn) auf einer Rennstrecke (1), bei dem mit zumindest einer Kamera (7, 8, 9) ein jeweiliges Rennfahrzeug (V1, V2, Vn) beim Überfahren eines vorbestimmten Streckenabschnitts, insbesondere der Start- und/oder Ziellinie (50), überwacht wird und die von der Kamera (7, 8) bereitgestellten Bilder in einer Aufzeichnungsvorrichtung (51) aufgezeichnet werden, wobei die von der Kamera (7, 8, 9) bereitgestellten Bilder nur während eines bestimmten Zeitfensters (ZF), innerhalb dessen ein Überfahren des Streckenabschnitts zu bestimmen ist, aufgezeichnet werden, wobei mittels einer von der Kamera separaten Sensoreinrichtung (53) das tatsächliche Überfahren des vorbestimmten Streckenabschnitts erfasst wird und ein Sensorsignal im Moment des Überfahrens des vorbestimmten Streckenabschnitts abgegeben wird, wobei das von der Kamera (7, 8, 9) im Moment der Abgabe des Sensorsignals der genannten Sensoreinrichtung (53) gemachte Bild dann, wenn das abgegebene Sensorsignal in dem bestimmten Zeitfenster (ZF) liegt, mit einer Markierung versehen wird und diese mit dem jeweiligen Bild verknüpfte Markierung in einer Event-Liste gespeichert wird, wobei die genannte Markierung dann von einem Markierungsleser ausgelesen wird, um das mit der Markierung verknüpfte Bild aus den von der Kamera (7, 8) bereitgestellten Bildern auszuwählen.

2. Eine Vorrichtung, die zur Erfassung, Überwachung und/oder Steuerung von Rennfahrzeugen (V1, V2, Vn) auf einer Rennstrecke (1) nach dem Verfahren von Anspruch 1 konfiguriert ist, mit zumindest einer Kamera (7, 8) zur Überwachung des Überfahrens eines vorbestimmten Streckenabschnitts, insbesondere der Start- und/oder Ziellinie (50), einer Aufzeichnungsvorrichtung (51) zur Aufzeichnung der von der Kamera (7, 8) bereitgestellten Bilder, einer Aufzeichnungs-Steuervorrichtung (52) zur automatischen Aufzeichnung der von der Kamera (7, 8) bereitgestellten Bilder nur während eines vorbestimmten Zeitfensters (ZFn), innerhalb dessen ein Überfahren des Streckenabschnitts zu bestimmen ist sowie einer von der Kamera separaten Sensoreinrichtung (53) zur Erfassung des Überfahrens des vorbestimmten Streckenabschnitts und Bereitstellen eines Sensorsignals zum Zeitpunkt des Überfahrens des vorbestimmten Streckenabschnitts, wobei eine Markierungsvorrichtung (54) zum Markieren eines im Moment des Auftretens des Sensorsignals der Sensoreinrichtung (53) aufgezeichneten Bildes dann, wenn das genannte Sensorsignal in dem vorbestimmten Zeitfenster (ZFn) auftritt, sowie Speichermittel zur Speicherung der zumindest einen Markierung in einer Event-Liste vorgesehen sind.

3. Vorrichtung nach dem vorhergehenden Anspruch, wobei die zumindest eine Markierung eine bildindividuelle Bildernummer (3924, 4060) ist und anhand einer aus der Event-Liste ausgelesenen Bildnummer das mit dieser Bildnummer verknüpfte Bild, welches ein Überfahren des Streckenabschnitts zeigt, auswählbar ist.

4. Vorrichtung nach einem der beiden vorhergehenden Ansprüche, wobei die Aufzeichnungs-Steuervorrichtung (52) eine Bestimmungseinrichtung (55) zur automatischen Bestimmung von Anfang und Ende des Zeitfensters (ZFn) in Abhängigkeit einer Rennfahrzeugposition und/oder eines Rennereignisses aufweist.

5. Vorrichtung nach dem vorhergehenden Anspruch, wobei die Bestimmungseinrichtung (55) Erfassungsmittel (56) zur Erfassung eines Startvorbereitungssignals und/oder eines Startsignals sowie einen Timer (57) zur Abgabe eines Endsignals nach Ablauf einer vorbestimmten Zeitspanne ausgehend von dem erfassten Startvorbereitungssignal und/oder des erfassten Startsignals aufweist.

6. Vorrichtung nach dem vorhergehenden Anspruch, wobei die Erfassungsmittel (56) zur Erfassung eines Startvorbereitungssignals einen Strom- und/oder Spannungssensor zur Erfassung der Strombeaufschlagung der Fahrspuren (L1, L2, Ln) der Rennstrecke (1) aufweisen.

7. Vorrichtung nach einem der beiden vorhergehenden Ansprüche, wobei das Zeitfenster (ZFn) einen Anfangszeitpunkt vor dem Startsignal, insbesondere an oder nach dem Startvorbereitungssignal, und einen Endzeitpunkt nach dem Startsignal, aber vor Ablauf einer vorbestimmten Reaktionszeitspanne besitzt.

8. Vorrichtung nach Anspruch 4 oder einem der darauf rückbezogenen Ansprüche, wobei die Bestimmungseinrichtung (55) Erfassungsmittel (58) zur Erfassung der Annäherung eines Rennfahrzeugs (V1, V2, Vn) an den vorbestimmten Streckenabschnitt und Erfassungsmittel (59) zur Erfassung der Entfernung des Rennfahrzeugs (V1, V2, Vn) von dem vorbestimmten Streckenabschnitt aufweist und das Zeitfenster (ZFn) in Abhängigkeit der Signale der genannten Erfassungsmittel (58, 59) festlegbar ist.

9. Vorrichtung nach dem vorhergehenden Anspruch, wobei die Erfassungsmittel (58, 59) in Fahrtrichtung vor und hinter dem vorbestimmten Streckenabschnitt an der Rennstrecke (1) angeordnete Sensoren (60, 61) zur Erfassung des Über- und/oder Vorbeifahrens eines Rennfahrzeugs (V1, V2, Vn) aufweist.

10. Vorrichtung nach dem vorhergehenden Anspruch, wobei die genannten Sensoren (60, 61) einen induktiven Sensor und/oder einen RFID-Leser und/oder einen optischen Sensor aufweisen.

11. Vorrichtung nach einem der vorhergehenden Ansprüche 2-10, wobei die Sensoreinrichtung (53) zur Erfassung des Überfahrens des vorbestimmten Streckenabschnitts einen Sensor (30) zwischen den Erfassungsmitteln (58, 59) zur Erfassung der Annäherung und Entfernung eines Rennfahrzeugs an den und/oder von dem Streckenabschnitt aufweist.

12. Vorrichtung nach einem der vorhergehenden Ansprüche 2-11, wobei die Sensoreinrichtung (53) zur Erfassung des Überfahrens des vorbestimmten Streckenabschnitts einen optischen Sensor (30) vorzugsweise in Form einer Lichtschranke aufweist.

13. Vorrichtung zum Abspielen von aufgezeichneten Bildern, die mittels einer Vorrichtung nach einem der vorhergehenden Ansprüche 2-12 mit einer Markierung versehen sind, wobei eine Abspielsteuervorrichtung (62) zum automatischen Abspielen von aufgezeichneten Bildern einen Markierungsleser (63) zum Lesen von den mit den Bildern verknüpften Markierungen und Auswahlmittel (64) zum Auswählen von abzuspielenden Bildern aus den abgespeicherten Bildern anhand eines Signals des Markierungslesers (63) aufweist.

## Claims

1. A method for the detection, monitoring and/or controlling of racing vehicles (V1, V2, Vn) on a racetrack (1), in which a respective racing vehicle (V1, V2, Vn) is monitored with at least one camera (7, 8, 9) when traversing a predetermined section of track, in particular the starting line and/or finishing line (50), and the images provided by the camera (7, 8) are recorded in a recording device (51), wherein the images provided by the camera (7, 8, 9) are only recorded during a defined time window (ZF), within which a traversing of the section of track is to be determined, wherein the actual traversing of the predetermined section of track is detected by means of a sensor device (53) separate from the camera and a sensor signal is output when traversing the predetermined section of the track, wherein the image produced by the camera (7, 8, 9) when outputting the sensor signal of said sensor device (53) is provided with a marker when the output sensor signal is within the determined time window (ZF), and the markers associated with the respective images are stored in an event list, wherein said marker is read out by a marker reader in order to select the image associated with the marker from the images provided by the camera (7, 8).

2. A device configured for the detection, monitoring and/or controlling of racing vehicles (V1, V2, Vn) on a racetrack (1) according to the method of claim 1, having at least one camera (7, 8) for monitoring the traversing of a predetermined section of a track, in particular the starting line and/or finishing line (50), a recording device (51) for recording the images provided by the camera (7, 8), a recording controller (52) for automatic recording of the images provided by the camera (7, 8) only during a predetermined time window (ZFn), during which traversing of the section of track is to be determined, as well as a sensor device (53) separate from the camera for detecting the traversing of the predetermined section of the track and providing a sensor signal at the time of traversing the predetermined section of the track, wherein a marking device (54) for marking an image recoded at the moment of occurrence of the sensor signal of the sensor device (53) then, when the named sensor signal occurs in the predefined time window (ZFn), as well as storage means for storing the at least one marker in an event list are provided.

3. The device according to the preceding claim, wherein the at least one marker is an image number (3924, 4060) for an individual image and the image associated with said image number, which shows a traversing of the section of track can be selected using an image number read out from the event list.

4. The device according to one of the two preceding claims, wherein the recording controller (52) comprises a determination device (55) for automatic determination of the start and end of the time window (ZFn) depending on a racing vehicle position and/or a race event.

5. The device according to the preceding claim, wherein the determination device (55) comprises detection means (56) for detecting a start preparation signal and/or a start signal as well as a timer (57) for outputting an end signal after the expiry of a predetermined time interval starting from the detected start preparation signal and/or the detected start signal.

6. The device according to the preceding claim, wherein the detection means (56) for detecting a start preparation signal comprise a current and/or voltage sensor for the detection of the application of current to the lane tracks (L1, L2, Ln) of the racetrack (1).

7. The device according to one of the two preceding claims, wherein the time window (ZFn) has a starting time before the start signal, in particular at or after the start preparation signal, and an end time after the start signal, but before the expiry of a predetermined reaction time interval.

8. The device according to claim 4 or to one of the claims dependent thereon, wherein the determination device (55) comprises detection means (58) for detecting the approach of a racing vehicle (V1, V2, Vn) to the predetermined section of track and detection means (59) for detecting the racing vehicle moving away (V1, V2, Vn) from the predetermined section of track and the time window (ZFn) can be set depending on the signals of said detection means (58, 59).

9. The device according to the preceding claim, wherein the detection means (58, 59) comprise sensors (60, 61) arranged on the racetrack (1) in front of and behind the predetermined section of track in the direction of travel for the detection of a passing and/or traversing racing vehicle (V1, V2, Vn).

10. The device according to the preceding claim, wherein the mentioned sensors (60, 61) comprise an inductive sensor and/or an RFID reader and/or an optical sensor.

11. The device according to one of the preceding claims 2-10, wherein the sensor device (53) for detecting the traversing of the predetermined section of track comprises a sensor (30) between the detection means (58, 59) for the detection of the approach and departure of a racing vehicle towards and/or away from the section of track.

12. The device according to one of the preceding claims 2-11, wherein the sensor device (53) for detecting the traversing of the predetermined track section comprises an optical sensor (30) preferably in the form of a light barrier.

13. The device for playback of recorded images, which are provided with a marker by means of a device according to one of the preceding claims 2-12, wherein a playback control device (62) for automatic playback of recorded images comprises a marker reader (63) for reading the markers associated with the images and selecting means (64) for selecting images to be played back from the stored images by means of a signal of the marker reader (63).

## Revendications

1. Procédé de détection, de surveillance et/ou de commande de voitures de course (V1, V2, Vn) sur un circuit de course (1), dans lequel, avec au moins une caméra (7, 8, 9), un véhicule respectif (V1, V2, Vn) lors du dépassement d'une section de circuit prédéterminée, notamment de la ligne de départ et/ou d'arrivée (50), est surveillé et dans lequel les images fournies par la caméra (7, 8) sont enregistrées dans un dispositif d'enregistrement (51), les images fournies par la caméra (7, 8, 9) étant enregistrées seulement pendant un créneau horaire déterminé (ZF) à l'intérieur duquel un dépassement de la section de circuit est à déterminer, le dépassement effectif de la section de circuit prédéterminée étant détecté au moyen d'un dispositif capteur (53) séparé de la caméra, et un signal de capteur étant sorti au moment du dépassement de la section de circuit prédéterminée, l'image prise par la caméra (7, 8, 9) au moment de la sortie du signal de capteur du dit dispositif capteur (53), lorsque le signal de capteur sorti se situe dans le créneau horaire déterminé (ZF), étant munie d'un marquage et ce marquage associé à l'image respective étant mémorisé dans une liste d'événements, ledit marquage étant lu par un lecteur de marquage afin de sélectionner l'image associée au marquage parmi les images fournies par la caméra (7, 8).

2. Dispositif qui est configuré pour la détection, la surveillance et/ou la commande de voitures de course (V1, V2, Vn) sur un circuit de course (1) selon la revendication 1, comprenant au moins une caméra (7, 8) pour la surveillance du dépassement d'une section de circuit prédéterminée, notamment de la ligne de départ et/ou d'arrivée (50), un dispositif d'enregistrement (51) pour l'enregistrement des images fournies par la caméra (7, 8), un dispositif de commande d'enregistrement (52) pour l'enregistrement automatique des images fournies par la caméra (7, 8) seulement pendant un créneau horaire prédéterminé (ZFn) à l'intérieur duquel un dépassement de la section de circuit est à déterminer, ainsi qu'un dispositif capteur (53) séparé de la caméra, destiné à enregistrer le dépassement de la section de circuit prédéterminée et à fournir un signal de capteur au moment du dépassement de la section de circuit prédéterminée, un dispositif de marquage (54) destiné à marquer une image enregistrée au moment de l'apparition du signal de capteur du dispositif capteur (53) lorsque ledit signal de capteur apparaît dans le créneau horaire prédéterminé (ZFn), ainsi que des moyens de mémorisation pour la mémorisation de l'au moins un marquage dans une liste d'événements étant ménagés.

3. Dispositif selon la revendication précédente, l'au moins un marquage étant un numéro d'image (3924, 4060) individuel à l'image, et l'image associée à ce numéro d'image, laquelle indique un dépassement de la section de circuit, étant sélectionnable à l'aide d'un numéro d'image lu dans la liste d'événements.

4. Dispositif selon l'une quelconque des deux revendications précédentes, le dispositif de commande d'enregistrement (52) présentant un dispositif de détermination (55) pour la détermination automatique du début et de la fin du créneau horaire (ZFn) en fonction d'une position de voiture de course et/ou d'un événement de la course.

5. Dispositif selon la revendication précédente, le dispositif de détermination (55) présentant des moyens de détection (56) destinés à détecter un signal de préparation au départ et/ou un signal de départ ainsi qu'une minuterie destinée à sortir un signal final après l'expiration d'une période de temps prédéterminée partant du signal de préparation au départ enregistré et/ou du signal de départ enregistré.

6. Dispositif selon la revendication précédente, les moyens de détection (56) destinés à détecter un signal de préparation au départ présentant un capteur de courant et/ou de tension destiné à enregistrer l'alimentation en courant des voies de circulation (L1, L2, Ln) du circuit de course (1).

7. Dispositif selon l'une quelconque des deux revendications précédentes, le créneau horaire (ZFn) possédant un moment initial avant le signal de départ, notamment au ou après le signal de préparation au départ, et un moment final après le signal de départ mais avant l'expiration d'une période de temps de réaction prédéterminée.

8. Dispositif selon la revendication 4 ou l'une quelconque des revendications y faisant renvoi, le dispositif de détermination (55) présentant des moyens de détection (58) pour la détection du rapprochement d'une voiture de course (V1, V2, Vn) à la section de circuit prédéterminée et des moyens de détection (59) pour la détection de l'éloignement de la voiture de course (V1, V2, Vn) de la section de circuit prédéterminée, et le créneau horaire (ZFn) étant déterminable en fonction des signaux des dits moyens de détection (58, 59).

9. Dispositif selon la revendication précédente, les moyens de détection (58, 59) présentant devant et derrière la section de circuit prédéterminée, en direction de circulation, des capteurs (60, 61) disposés sur le circuit de course (1) pour détecter le dépassement et/ou le passage d'une voiture de course (V1, V2, Vn).

10. Dispositif selon la revendication précédente, lesdits capteurs (60, 61) présentant un capteur inductif et/ou un lecteur RFID et/ou un capteur optique.

11. Dispositif selon l'une quelconque des revendications précédentes 2 à 10, le dispositif capteur (53) destiné à détecter le dépassement de la section de circuit prédéterminée présentant un capteur (30) entre les moyens de détection (58, 59) destinés à détecter le rapprochement et l'éloignement d'une voiture de course vers et/ou de la section de circuit.

12. Dispositif selon l'une quelconque des revendications précédentes 2 à 11, le dispositif capteur (53) destiné à détecter le dépassement de la section de circuit prédéterminée présentant un capteur optique (30), de préférence sous forme d'une barrière photoélectrique.

13. Dispositif destiné à lire des images enregistrées, lesquelles sont munies d'un marquage au moyen d'un dispositif selon l'une quelconque des revendications précédentes 2 à 12, un dispositif de commande de lecture (62) pour la lecture automatique d'images enregistrées présentant un lecteur de marquage (63) pour la lecture des marquages associés aux images, et des moyens de sélection (64) pour la sélection d'images à lire parmi les images enregistrées à l'aide d'un signal du lecteur de marquage (63).
